# FASCICULE DE BREVET EUROPEEN

(11) **EP 1 263 666 B1**
(45) Date de publication et mention de la délivrance du brevet: **21.12.2005**
(21) Numéro de dépôt: 01907733.8
(22) Date de dépôt: 08.02.2001
(51) Int. Cl.: B65G 51/03, B65G 21/20

(54) **TRON ON COURBE DE CONVOYEUR AVEC RAILS DE GUIDAGE A ECARTEMENT REGLABLE**
KURVENABSCHNITT EINES FÖRDERERS MIT FÜHRUNGSBAHNEN MIT REGELBARER BREITE
CURVED CONVEYOR SECTION HAVING GUIDE RAILS WITH ADJUSTABLE SPACING

(30) Priorité: 16.03.2000 FR 0003406
(43) Date de publication de la demande: 11.12.2002
(73) Titulaire: Netra Systems, 59700 Marcq en Baroeul (FR)
(72) Inventeur: DELAPORTE, Pascal, F-59113 Seclin (FR); MALVOISIN, Hervé, F-59700 Marcq en Baroeul (FR); LAQUAY, Fabien, F-59510 Hem (FR)
(74) Mandataire: Matkowska, Franck
(86) Numéro de dépôt international: PCT/FR2001/000367
(87) Numéro de publication internationale: WO 2001/068491

(56) Documents cités:
- DE-U- 29 722 245
- FR-A- 2 793 228
- US-A- 5 516 239
- US-A- 5 542 789
- US-A- 5 567 091

## Description

La présente invention concerne le domaine du transport d'articles guidés entre deux rails de guidage, et trouve plus particulièrement son application au transport sous l'action de jets d'air d'articles suspendus, tels que par exemple des bouteilles ou flacons en plastiques, des préformes, etc. Dans ce domaine, l'invention a pour objet un tronçon courbe de convoyeur mettant en oeuvre des rails de guidage dont l'écartement est réglable.

Pour transporter des articles légers, il est à ce jour connu d'utiliser des convoyeurs à air, qui sont équipés de deux rails de guidage parallèles, sur lesquels les articles sont suspendus. Dans ce type de convoyeur, les articles sont transportés sous l'action de jets d'air en étant guidés le long du convoyeur par les deux rails de guidage. S'agissant plus particulièrement du transport de récipients plastiques tels que des bouteilles ou flacons, les articles sont le plus souvent suspendus sur les deux rails de guidage par l'intermédiaire d'une protubérance de leur col, communément appelée collerette. Pour cette raison, dans ce type d'application particulière les rails de guidage sont encore communément appelés guides sous col.

On comprend que l'écartement entre les deux rails de guidage est conditionné par la dimension des articles au niveau des deux rails. S'agissant par exemple de bouteilles suspendues par l'intermédiaire de leur collerette, l'écartement entre les deux rails de guidage doit nécessairement être inférieur au diamètre de la collerette, et légèrement supérieur au diamètre de l'article sous collerette, en sorte que les bouteilles soient retenues verticalement par les rails de guidage.

Dans le but de permettre le transport sur un même convoyeur d'articles de dimensions variées, on a déjà proposé à ce jour de réaliser des convoyeurs équipés de moyens permettant un réglage de l'écartement entre les deux rails de guidage. Différentes solutions ont été par exemple décrites dans le brevet US-A-5 246 314 ( colonne 5 lignes 3 à 17), dans le brevet US-A- 5 516 239 ( colonne 5 lignes 26 à 32), dans la demande de brevet européen EP-A- 0 526 963 ( colonne 5 ligne 21 à 34) et dans la demande de brevet européen EP-A- 0 842 875 (colonne 4 lignes 23 à 38). Ces solutions ont en commun la mise en oeuvre de moyens mécaniques permettant un déplacement relatif dans un plan horizontal des deux rails de guidage.

Les solutions précitées de l'art antérieur présentent l'inconvénient principal d'être inadaptées à un réglage de l'écartement entre les deux rails de guidage dans une portion courbe (virage) d'un convoyeur, et de ce fait sont mises en oeuvre exclusivement dans des portions rectilignes.

La présente invention vise à proposer une solution au réglage de l'écartement entre les deux rails de guidage d'un convoyeur qui soit adaptée aux portions courbes de convoyeur.

L'invention a ainsi pour objet un tronçon courbe de convoyeur, qui de manière connue permet le transport d'articles guidés entre deux rails de guidage, et comporte des moyens de réglage de l'écartement (e) entre les deux rails de guidage.

De manière caractéristique selon l'invention, au moins un des deux rails de guidage est élastiquement déformable, et les moyens de réglage sont conçus pour déplacer et déformer ce rail de guidage élastiquement déformable en sorte de lui conférer une courbure donnée qui dépend de sa position.

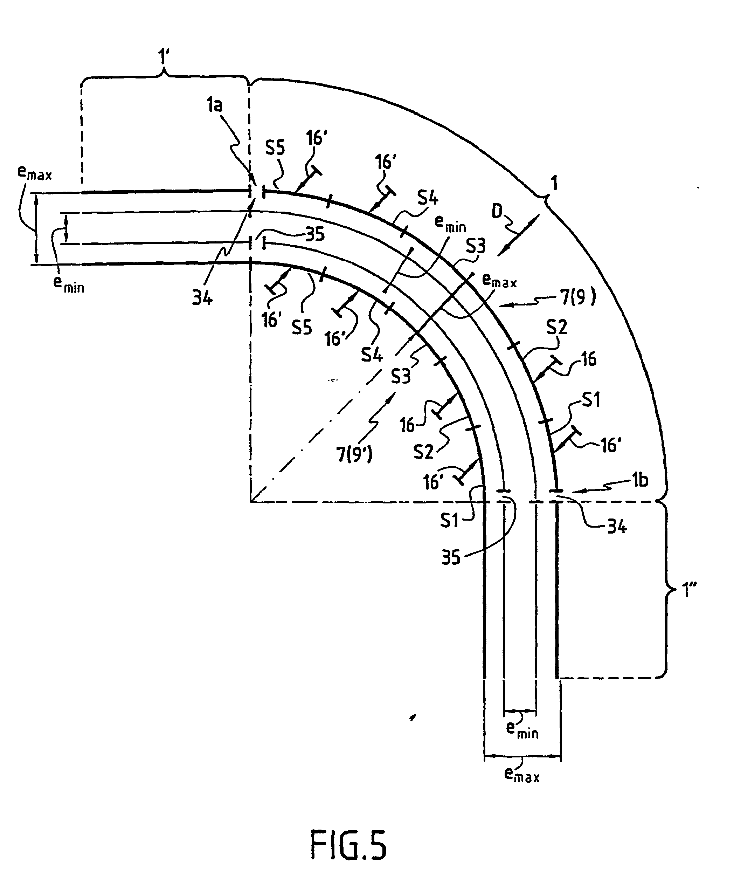

Tel que cela apparaîtra plus clairement ci-après, en référence notamment à la figure 5, grâce à l'invention, et contrairement aux solutions de l'art antérieur, le réglage de l'écartement entre les deux rails de guidage s'accompagne d'un ajustement de la courbure du rail de guidage qui est déplacé, de telle sorte que les deux extrémités de ce rail de guidage se trouvent toujours dans ie prolongement des rails de guidage positionnés en amont et aval et que le réglage d'écartement soit constant sur toute la courbure.

D'autres caractéristiques et avantages de l'invention apparaîtront plus clairement à la lecture de la description ci-après d'une variante préférée de réalisation d'un tronçon courbe de convoyeur à air conforme à l'invention, laquelle description est donnée à titre d'exemple non limitatif et en référence aux dessins annexés sur lesquels :
- la figure 1 est une perpective vue de dessous d'un tronçon courbe de convoyeur réalisé conformément à une variante préférée de réalisation de l'invention,
- la figure 2 est une vue en plan de dessous du tronçon de la figure 1,
- la figure 3 est une coupe transversale du tronçon de la figure 2 selon le plan III-III
- la figure 4 est une vue en coupe du tronçon de la figure 2 selon le plan IV-IV, qui permet de détailler les deux butées fin de course réglables d'un vérin de réglage,
- et la figure 5 est un schéma illustrant le principe de déformation des rails de guidage lors d'une modification de leur écartement.

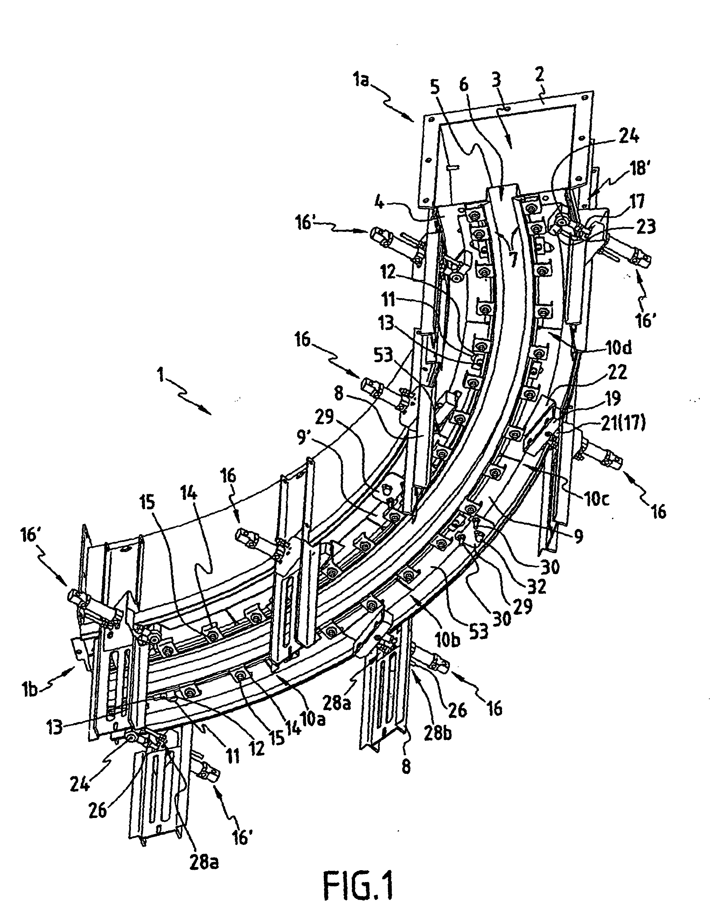

On a représenté sur les figures 1 à 3 un tronçon courbe 1 de convoyeur à air, qui dans l'exemple particulier illustré forme un quart de cercle. Cette forme particulière n'est pas limitative de l'invention, laquelle peut s'appliquer non seulement à tout tronçon courbe en forme d'arc de cercle mais également d'une manière plus générale à un tronçon de convoyeur présentant une forme courbe quelconque. Ce tronçon courbe 1 de convoyeur est destiné être assemblé avec deux tronçons rectilignes aval 1' et amont 1" (représentés de manière schématique sur la figure 5), orientés sensiblement à angle droit l'un par rapport à l'autre et venant respectivement se raccorder dans le prolongement des deux extrémités 1 a et 1b du tronçon courbe 1.

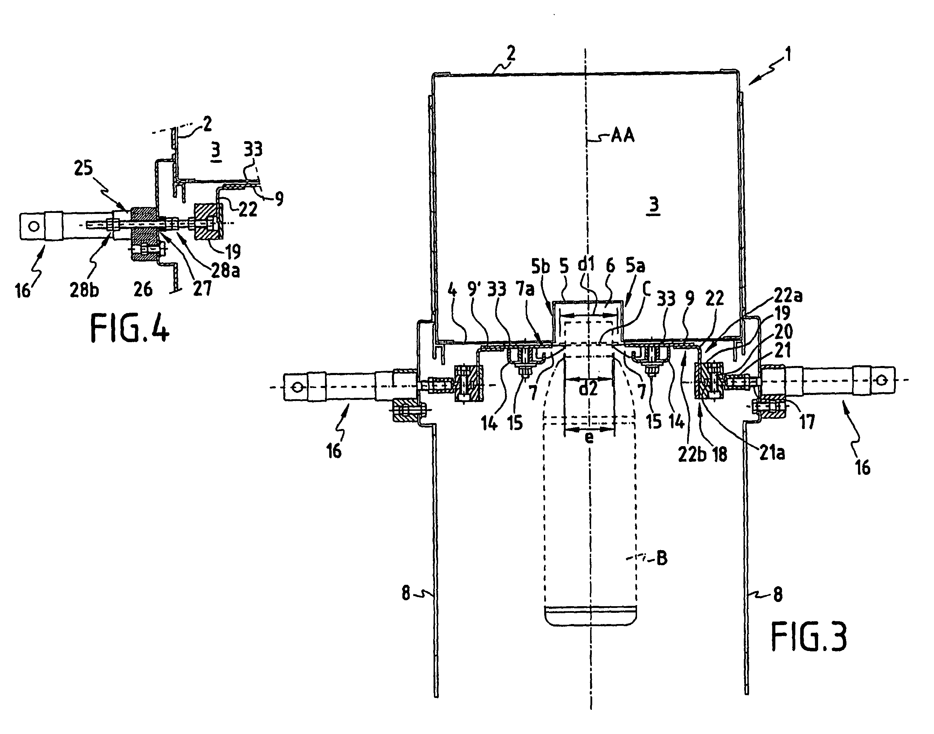

Ce tronçon courbe 1 comporte un caisson de soufflage 2 courbe qui est symétrique par rapport au plan vertical AA (figure 3), et qui délimite une chambre 3, prévue pour être de manière usuelle alimentée en air sous pression au moyen d'un ventilateur (non représenté). Sur ce caisson 2 sont fixés une pluralité de pontets 8. Le caisson de soufflage 2 est par exemple réalisé en acier inoxydable et les pontets 8 sont des profilés en acier inoxydable qui sont par exemple vissés au caisson 2.

La face inférieure du caisson 2 est formée par une tôle 4 qui est appelée par la suite tablier, et qui comporte un décrochement central 5, délimitant un canal de soufflage longitudinal courbe 6. De manière usuelle, les deux parois latérales 5a et 5b de ce décrochement 5 sont pourvues d'une pluralités de fentes de soufflage, qui sont judicieusement réparties sur toute la longueur du décrochement 5, et qui permettent l'échappement de l'air sous pression à l'intérieur de la chambre 3 , sous la forme d'une pluralité de jets d'air de transport générés dans le canal de soufflage 6.

Le tablier 4 sert de support à deux rails de guidage 7 parallèles, désignés ci-après guides sous col, et montés symétriquement par rapport au plan AA. L'écartement e ( figure 3) entre les deux guides sous col est constant sur toute la longueur du tronçon courbe et est réglable de manière automatique. Les moyens de réglage automatique de cet écartement e seront détaillés ultérieurement.

En référence à la figure 3, le tronçon 1 est utilisé pour transporter, dans une portion courbe (virage) d'un convoyeur à air, des articles suspendus sur les guides sous col 7, tels que des bouteilles B suspendues sur les guides sous col 7 par l'intermédiaire de leur collerette C. Les jets d'airs générés dans le canal de soufflage 6 et dirigés sur les bouteilles B au dessus de leur collerette C permettent de propulser de manière aéraulique les bouteilles dans un sens de transport fixé par l'orientation des jets d'air, les bouteilles étant au cours de leur transport à la fois retenues verticalement et guidées latéralement par les guides sous col 7.

On comprend que dans ce type de convoyeur, l'écartement e entre les deux guides sous col 7 doit être parfaitement réglé par rapport à la dimension des bouteilles, et plus précisément par rapport au diamètre d₁ de la collerette C des bouteilles et au diamètre sous collerette d₂, cet écartement étant fixé à une valeur inférieure au diamètre d₁ de la collerette et légèrement supérieur au diamètre sous collerette d₂ . En pratique, la différence entre l'écartement e et le diamètre sous collerette d₂ est très faible, ce qui impose un réglage fin de l'écartement e. A titre indicatif cette différence est en pratique de l'ordre de 1 mm à 2mm.

Les deux guides sous col 7 sont constitués par deux profilés cintrés en forme de quart de cercle et déformables élastiquement de telle sorte qu'il est possible par une action mécanique de leur donner et de modifier leur rayon de courbure de manière réversible. Dans un exemple particulier de réalisation, les deux guides sous col 7 sont plus particulièrement constitués par deux profilés en plastique, et par exemple en polyéthylène.

Un exemple de réalisation des moyens de réglage automatique de l'écartement e entre les guides sous col 7 va a présent être détaillé.

Dans une variante préférée de réalisation, ces moyens de réglage comportent pour chaque guide sous-sol 7, une plaque de déformation 9 ou 9' présentant un rayon de courbure initial donné au repos. Cette plaque de déformation 9 ou 9' est d'une manière générale élastiquement déformable. Plus particulièrement, dans l'exemple illustrée, cette plaque de déformation 9 ou 9' est une plaque de faible épaisseur, par exemple en métal et plus particulièrement en acier inoxydable, qui est divisée en plusieurs secteurs S1 à S5 reliés par des zones de jonction déformables. Plus particulièrement dans l'exemple de réalisation des figures 1 à 3, les secteurs S1 à S5 sont obtenus en réalisant dans chaque plaque de déformation 9 ou 9', par enlèvement de matière, des fentes de déformation 10a à 10d qui s'étendent dans la direction de la largeur de la plaque depuis l'un des deux bords longitudinaux 9a de la plaque 9 où 9'. La portion de matière restante au niveau de la chaque fente de déformation 10a à 10d constitue une zone de jonction entre deux secteurs permettant une articulation des deux secteurs l'un par rapport à l'autre par écartement de la fente de déformation.

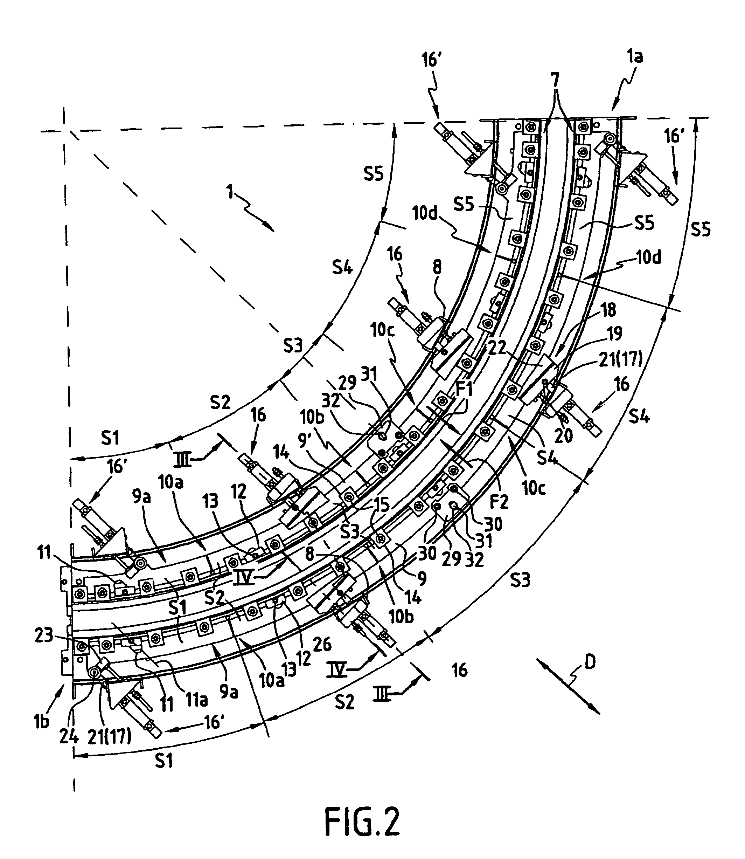

En référence aux figures 1 et 2 les plaques 9 et 9' sont montées sur le tablier 4 du caisson de soufflage 2, respectivement de part et d'autre du décrochement central 5 de ce tablier 4, la plaque 9 étant située à l'extérieur (extrados) du tronçon courbe, et la plaque 9' étant située à l'intérieur (intrados) de la portion courbe. La plaque de déformation 9 (extrados) est orientée de telle sorte que son bord longitudinal 9a est orienté vers l'extérieur (extrados), et la plaque de déformation 9' (intrados) est orientée de telle sorte que son bord longitudinal 9a est orienté vers l'intérieur (intrados).

Chaque plaque 9, 9' de déformation est assemblée avec le tablier 4 en sorte d'être mobile en translation dans un plan horizontal et selon une direction de déplacement, qui est symbolisée sur la figure 2 par la double flèche D. Cette direction de déplacement D est de préférence sensiblement parallèle à la bissectrice du secteur angulaire (angle droit dans l'exemple illustré) formé par le tronçon courbe 1.

Pour permettre leur déplacement dans la direction D, chaque plaque de déformation 9, 9' comporte au niveau de chaque secteur Si à S5 des lumières oblongues 11 d'axe 11a parallèle à la direction de déplacement D. Chaque plaque de déformation 9, 9' est maintenus verticalement par rapport au tablier 4 par des plaques de maintien 12, assemblées respectivement au tablier 4 par des vis 13 qui sont passées respectivement à travers les lumières 11 de la plaque de déformation 9 ou 9'.

De préférence, afin de diminuer les phénomènes d'usure et améliorer le glissement des plaques de déformation 9, 9' par rapport au tablier 4 lors du réglage de l'écartement e entre guides sous col 7, entre la face supérieure de chaque plaque de déformation 9, 9' et la face inférieure du tablier 4 est intercalée une plaque 33 à faible coefficient de frottement, et par exemple une plaque de faible épaisseur en polytétrafluoroéthylène.

Chaque guide sous col 7 est fixé rigidement sur la plaque de déformation correspondante 9 ou 9' et se trouve de ce fait cintré selon le même rayon de courbure que la plaque. Dans l'exemple illustré cette fixation est réalisée au moyen d'une pluralité de pattes de serrage 14, plus communément appelées "clames", permettant de serrer à force chaque guide sous col 7 contre la face inférieure de la plaque de déformation 9 ou 9', la force de serrage étant réglée au niveau de chaque clame 14 au moyen d'un boulon 15. En outre, afin de faciliter le positionnement du guide sous col 7 par rapport à la plaque, ce guide sous col 7 présente un talon de positionnement 7a (figure 3).

La translation de chaque plaque de déformation 9, 9' selon la direction D est assurée au moyen d'une pluralité de vérins 16,16', montés respectivement sur les pontets 8 du tronçon courbe. Dans l'exemple particulier illustré, pour chaque plaque de déformation 9 , 9' sont prévus deux vérins 16 reliés respectivement aux secteurs S2 et S4 de la plaque de déformation et deux vérins 16' reliés respectivement aux secteurs S1 et S5 de la plaque de déformation. Chaque vérin 16, 16' est orienté de telle sorte que sa tige mobile 17 est orientée parallèlement à la direction de déplacement D. On peut indifféremment utiliser des vérins électriques ou pneumatiques.

Plus particulièrement, en référence à la figure 3, la tige 17 des vérins 16 est assemblée, par l'intermédiaire d'un système de fixation 18, au secteur correspondant S2 ou S4 de la plaque de déformation 9 ou 9', de préférence dans la portion centrale de ce secteur. Chaque système de fixation 18 comprend un bloc 19, qui est par exemple une pièce monobloc en plastique. Sur l'extrémité de la tige 17 d'un vérin 16 est vissée une chape 21 muni d'un orifice au niveau de sa partie extrême 21 a. Cette partie extrême 21a de la chape 21 est introduite à l'intérieur du bloc 19, et est rendue solidaire du bloc 19 par un axe 20, qui est orienté verticalement lorsque le bloc 19 est assemblé à la tige 17 du vérin, et qui permet un débattement en rotation selon cet axe du bloc 19 par rapport à la tige 17 du vérin 16. Chaque système de fixation 18 comprend également une équerre 22, par exemple en acier inoxydable, dont une première aile 22a est emboîtée à force dans une rainure du bloc 19, et dont l'autre aile 22b est fixée rigidement, par exemple par soudure, à la face inférieure de la plaque de déformation 9,9' correspondante.

En référence à la figure 2, la tige 17 des vérins 16' est fixée au secteur correspondant S1 ou S5 de la plaque de déformation 9 ou 9' par une système de fixation 18', qui diffère légèrement du système de fixation 18 précédemment décrit en ce que principalement le bloc 19 et l'équerre 22 sont remplacés par une seule pièce monobloc métallique 23 soudée sur la face inférieure de la plaque de déformation 9,9'. Cette pièce 23 comporte en outre un axe 24, qui est l'équivalent de l'axe 20 du système de fixation 18, et sur lequel est monté rotative la chape 21 de la tige 17 du vérin 16. Cette différence de mise en oeuvre se justifie uniquement pour des raison d'encombrement. Il est par conséquent envisageable que tous les vérins soient fixés à la plaque de déformation 9 ou 9' par le même système de fixation 18, 18' ou par un système équivalent, l'important étant que ce système de fixation autorise un léger débattement en rotation selon un axe sensiblement vertical de la tige 17 du vérin par rapport à la plaque de déformation 9, 9'.

A chaque vérin 16,16' est associé un système de butées réglables permettant de régler deux positions fin de course de la tige 17 du vérin (positions sortie et rentrée). Si l'on se réfère à la figure 4, dans un exemple de réalisation, ce système 25 de butées réglables comprend une tige filetée 26 qui est fixée rigidement à une première extrémité au bloc 19 du système de fixation 18 ( ou à la pièce 23 du système de fixation 18' pour les vérins 16'). Cette tige filetée 26 est passée à travers une ouverture 27 prévue dans le pontet 8 sur lequel est monté le vérin 16 ou 16'. De part et d'autre de cette ouverture 27 sont montés sur la tige filetée 26 : un premier ensemble écrou / contre-écrou 28a. destiné à former une butée intérieure par rapport au pontet 8 (butée de réglage de la position fin de course rentrée de la tige du vérin) et un second ensemble écrou / contre-écrou 28b destiné à former une butée extérieure par rapport au pontet 8 (butée de réglage de la position fin de course sortie de la tige du vérin). En réglant la position sur la tige filetée de chaque ensemble écrou/contre-écrou 28a 28b on règle les deux butées fin de course de la tige 17 de chaque vérin.

Si l'on se réfère à présent aux figures 1 et 2, sur chaque plaque de déformation 9,9' est montée en partie centrale, c'est-à-dire sur le secteur S3, une plaque de mise en butée 29, qui est fixée rigidement à la plaque de déformation 9,9' par exemple au moyen de boulons 30. Dans chaque plaque de mise en butée 29 est réalisée une lumière oblongue 31 orientée selon la direction de déplacement D précitée. Chaque plaque de mise en butée 29 est enfilée par l'intermédiaire de sa lumière 31 sur une tige 32 verticale qui est fixée de manière rigide au tablier 4 du caisson de soufflage 2, et qui est destinée à faire office de butée au déplacement de la plaque de mise en butée 29.

Le réglage automatique de l'écartement entre les guides sous col 7 du tronçon courbe 1 de convoyeur qui vient d'être décrit en référence aux figures 1 à 4 va à présent être expliqué, en référence notamment à la figure 5. Sur cette figure 5, on a schématisé en trait épais le tronçon courbe 1 de convoyeur dans une première position de réglage des guides sous col 7 dans laquelle l'écartement e entre les deux guides sous col 7 est réglé à une première valeur maximale (eₘₐₓ), qui est sensiblement constante sur toute la longueur des guides sous col. Les deux guides sous col 7 forment ainsi un chacun un arc de cercle de rayon de courbure donné. En référence à la figure 5, le guide sous col 7 sur l'intrados du tronçon courbe 1 se trouve dans le prolongement immédiat des guides sous col des tronçons rectilignes amont 1' et aval 1 ". Le guide sous col 7 sur l'extrados du tronçon courbe 1 se trouve également dans le prolongement des guides sous col des tronçons rectilignes amont 1' et aval 1 ", mais avec un léger écartement 34 entre les guides sous col.

La configuration précitée (écartement eₘₐₓ) correspond également à celle du tronçon courbe 1 de la figure 2. Dans cette configuration, les tiges 17 de l'ensemble des vérins 16, 16' sont en position rentrée, les écrou/contre-écrou 28a étant en butée contre le pontet 8 correspondant. Les tiges de butée 32 ne sont pas au contact des plaques de mise en butée 29. De préférence, dans cette configuration, les guides sous col 7 sont non contraints, et se trouvent dans leur position cintrée initiale de repos. Ceci n'est toutefois pas une condition nécessaire de l'invention ; dans une autre variante, dans cette configuration, les guides sous col 7 pourraient être soumis au moyen des vérins 16, 16' et de la plaque de déformation associée 9 ou 9' à une contrainte mécanique de déformation afin d'obtenir le rayon de courbure requis.

Pour obtenir la seconde configuration avec écartement minimum (eₘᵢₙ) entre guides sous col 7, on actionne simultanément les vérins 16 et 16' pour chaque guide sous col 7 ( intrados et extrados). On déplace ainsi chaque plaque de déformation dans la direction D en la rapprochant de l'autre plaque de déformation ( Figure 2 / déplacement selon les flèche F1 pour la plaque 9' et selon la flèche F2 pour la plaque 9), ce qui permet de diminuer l'écartement entre les deux plaques 9,9' et par là-même l'écartement e entre les deux guides sous col 7. Au cours de ce déplacement, dans une première phase l'ensemble rigide formé par la plaque de déformation 9 (ou 9') et le guide sous col 7 ne subissent aucune déformation et sont simplement translatés. Cette première phase se termine lorsque la plaque de mise en butée 29 qui est fixée sur la plaque de déformation 9 (ou 9') arrive au niveau de sa lumière 31 au contact de la tige de butée 32 qui lui est associée. A partir de cet instant, le secteur central S3 de la plaque de déformation 9 ( ou 9') se trouve bloqué en position par la tige de butée 32, et dans une seconde phase, la poursuite de la sortie de la tige 17 des vérins 16,16' en combinaison avec le blocage assuré par la tige de butée 32 provoque la déformation de la courbure de la plaque 9 (ou 9') au niveau de ses secteurs S1, S2, S4 et S5, ce qui permet de modifier le rayon de courbure du guide sous col 7 porté par cette plaque de déformation. Cette seconde phase s'achève avec la mise en butée fin de course de tous les vérins 16, 16' au moyen des écrou/contre-écrou 28b. A la fin de cette seconde phase, chaque guide sous col 7 présente un nouveau rayon de courbure, qui est légèrement plus petit que celui de la figure 2 pour le guide sous col 7 fixé sur la plaque de déformation 9 (extrados), et qui est légèrement plus grand que celui de la figure 2 pour le guide sous col 7 fixé sur la plaque de déformation 9' (intrados).

En final, après rapprochement et déformation des deux guides sous col 7, on obtient un tronçon courbe de convoyeur dans une seconde configuration, dans laquelle l'écartement e entre les deux guides sous-col 7 est automatiquement réglée à une seconde valeur minimale (eₘᵢₙ), qui est sensiblement constante sur toute la longueur des guides sous-col 7. Dans cette configuration illustrée en trait fin sur la figure 5, les deux guides sous col 7 du tronçon courbe 1, grâce à la modification subie par leur rayon de courbure, se trouvent dans le prolongement des guides sous col des tronçons rectilignes 1' et 1 ", lorsque l'écartement des guides sous col de ces tronçons rectilignes 1' et 1" a également été réglé à la valeur minimale (eₘᵢₙ). Dans cette seconde configuration, les extrémités du guide sous col 7 sur l'intrados se sont légèrement écartés des extrémités des guides sous col des tronçons rectilignes amont 1' et aval 1" (écartement 35). A l'inverse, les extrémités du guide sous col 7 sur l'extrados se sont rapprochés des extrémités des guides sous col des tronçons rectilignes amont 1' et aval 1". Il convient de souligner que ce déplacement relatif des extrémités des guides sous cols ( écartements 34 et 35) est en pratique très faible, et ne perturbe pas le bon convoyage des articles. Ceci est d'autant plus vrai que cet écartement 34 ou 35 ne se retrouve pour une configuration donnée que sur l'un des deux guides sous col 7.

Afin de mieux comprendre l'intérêt de la modification du rayon de courbure des guides sous col 7 en cas de modification de l'écartement entre guides, on a représenté en pointillés sur la figure 5 l'un des guides sous col 7 dans le cas d'un rapprochement sans modification de son rayon de courbure. Il apparaît immédiatement que dans une telle hypothèse, ce guide sous col 7 du tronçon courbe 1 ne se trouve plus dans le prolongement des guides sous col des tronçons rectilignes amont 1' et aval 1", ce qui perturberait complètement le convoyage des articles lors du passage d'un tronçon de convoyeur à l'autre.

Dans la variante de réalisation qui a été décrite, le tronçon courbe 1 de convoyeur a été prévu pour avoir seulement deux configurations (écartements eₘᵢₙ et eₘₐₓ entre guides sous col 7). Cette variante simplifiée n'est toutefois pas limitative de l'invention et peut être adaptée par l'homme du métier pour réaliser un tronçon courbe dont l'écartement entre guides sous col 7 peut être réglé à un plus grand nombre de valeurs différentes. Egalement, l'invention peut être mise en oeuvre sur tout type de convoyeur dans lequel les articles sont transportés en étant guidés et de préférence suspendus sur deux rails de guidage, et n'est pas limitée au domaine des convoyeurs à air.

## Revendications

1. Tronçon courbe de convoyeur pour le transport d'articles guidés entre deux rails de guidage (7), et comportant des moyens de réglage de l'écartement (e) entre les deux rails de guidage, **caractérisé en ce qu'**au moins un des deux rails de guidage est élastiquement déformable, et **en ce que** les moyens de réglage sont conçus pour déplacer et déformer ce rail de guidage élastiquement déformable en sorte de lui conférer une courbure donnée qui dépend de sa position.

2. Tronçon courbe de convoyeur selon la revendication 1 **caractérisé en ce que** les moyens de réglage comportent, pour un rail de guidage (7), une plaque de déformation (9,9') qui est élastiquement déformable, et **en ce que** le rail de guidage (7) est fixé rigidement à cette plaque de déformation.

3. Tronçon courbe de convoyeur selon la revendication 2 **caractérisé en ce que** la plaque de déformation (9,9') est divisée en plusieurs secteurs (S1,....) reliés par des zones de jonction déformables.

4. Tronçon courbe de convoyeur selon la revendication 3 **caractérisé en ce que** la plaque de déformation (9,9') comporte au moins une fente de déformation (10a) qui s'étend dans la direction de la largeur de la plaque depuis l'un des deux bords longitudinaux (9a) de la plaque (9,9').

5. Tronçon courbe de convoyeur selon l'une des revendications 1 à 4 **caractérisé en ce qu'**un rail de guidage (7) et la plaque de déformation (9,9') qui lui est associé présentent chacun une forme en arc de cercle et **en ce que** la plaque de déformation (9,9') est divisée en au moins trois secteurs dont un secteur central (S3).

6. Tronçon courbe de convoyeur selon la revendication 5 **caractérisé en ce que** qu'un rail de guidage (7) et la plaque de déformation (9,9') qui lui est associé présentent chacun une forme en quart de cercle et **en ce que** la plaque de déformation (9,9') est divisée en au moins cinq secteurs.

7. Tronçon courbe de convoyeur selon l'une des revendications 1 à 6 **caractérisé en ce que** les moyens de réglage comportent, pour un rail de guidage (7), au moins une butée fixe (32), et des moyens de déplacement du rail de guidage (7) par rapport à cette butée, qui permettent de déformer le rail de guidage (7) par appui sur cette butée.

8. Tronçon courbe de convoyeur selon la revendication 7 **caractérisé en ce que** la butée fixe (32) est passé à travers une lumière (31) réalisée directement dans la plaque de déformation (9,9') ou dans une plaque de mise en butée (29) fixée rigidement à la plaque de déformation (9,9').

9. Tronçon courbe de convoyeur selon l'une des revendications 1 à 8 **caractérisé en ce que** les moyens de réglage sont conçus pour déplacer un rail de guidage (7) et exercer des forces de déformation mécanique sur ce rail de guidage (7) dans une direction (D) parallèle à la bissectrice du secteur angulaire défini par le rail de guidage (7).

10. Tronçon courbe de convoyeur selon l'une des revendications 1 à 9 **caractérisé en ce que** les moyens de réglage comportent plusieurs vérins (16,16').

11. Tronçon courbe de convoyeur selon la revendication 10 et l'une des revendications 3 à 6 **caractérisé en que** chaque secteur d'une plaque de déformation (9,9'), à l'exception éventuellement du secteur central (S3), est relié à la tige (17) d'au moins un vérin (16,16').

12. Tronçon courbe de convoyeur selon la revendication 10 ou 11 et l'une des revendications 2 à 6 **caractérisé en ce que** la tige (17) de chaque vérin (16,16') est fixée sur la plaque de déformation (9,9') au moyen d'une liaison (18, 18') autorisant un débattement en rotation, selon un axe sensiblement vertical, de la tige (17) par rapport à la plaque de déformation (9,9')

13. Tronçon courbe de convoyeur selon l'une des revendications 1 à 12
**caractérisé en ce que** les deux rails guidage (7) sont élastiquement déformables, et **en ce que** les moyens de réglage sont conçus pour déplacer et déformer chaque rail de guidage.

14. Convoyeur pour le transport d'articles comportant plusieurs tronçons successifs (1',1,1") **caractérisé en ce que** l'un au moins de ces tronçons est un tronçon courbe conforme à l'une des revendications 1 à 13.

## Patentansprüche

1. Gebogener Abschnitt eines Förderers für den Transport von Artikeln, die zwischen zwei Führungsschienen (7) geführt sind, und welcher Mittel zum Einstellen des Abstands (e) zwischen den zwei Führungsschienen umfasst, **dadurch gekennzeichnet, dass** mindestens eine der Führungsschienen elastisch verformbar ist, und dass die Einstellmittel konzipiert sind, um diese elastisch verformbare Führungsschiene zu verstellen und verformen, so dass sie eine gegebene Krümmung erhält, die von ihrer Position abhängt.

2. Gebogener Abschnitt eines Förderers nach Anspruch 1, **dadurch gekennzeichnet, dass** die Einstellmittel für eine Führungsschiene (7) eine Verformungsplatte (9, 9') umfassen, die elastisch verformbar ist, und dass die Führungsschiene (7) starr an dieser Verformungsplatte befestigt ist.

3. Gebogener Abschnitt eines Förderers nach Anspruch 2, **dadurch gekennzeichnet, dass** die Verformungsplatte (9, 9') in mehrere Sektoren (S1,...) unterteilt ist, die durch verformbare Verbindungszonen verbunden sind.

4. Gebogener Abschnitt eines Förderers nach Anspruch 3, **dadurch gekennzeichnet, dass** die Verformungsplatte (9, 9') mindestens einen Verformungsschlitz (10a) umfasst, der sich in die Richtung der Breite der Platte von einem der zwei Längsränder (9a) der Platte (9, 9') ausgehend erstreckt.

5. Gebogener Abschnitt eines Förderers nach einem der Ansprüche 1 bis 4, **dadurch gekennzeichnet, dass** eine Führungsschiene (7) und die Verformungsplatte (9, 9'), die ihr zugewiesen ist, jeweils eine Kreisbogenform aufweisen, und dass die Verformungsplatte (9, 9') in mindestens drei Sektoren, darunter ein zentraler Sektor (S3) unterteilt ist.

6. Gebogener Abschnitt eines Förderers nach Anspruch 5, **dadurch gekennzeichnet, dass** eine Führungsschiene (7) und die Verformungsplatte (9, 9'), die ihr zugewiesen ist, jeweils eine Form eines Viertelbogens aufweisen, und dass die Verformungsplatte (9, 9') in mindestens fünf Sektoren unterteilt ist.

7. Gebogener Abschnitt eines Förderers nach einem der Ansprüche 1 bis 6, **dadurch gekennzeichnet, dass** die Einstellmittel für eine Führungsschiene (7) mindestens einen stationären Anschlag (32), und Mittel zum Bewegen der Führungsschiene (7) in Bezug auf diesen Anschlag, die es erlauben, die Führungsschiene (7) durch ihr Aufliegen auf diesen Anschlag zu verformen, umfassen.

8. Gebogener Abschnitt eines Förderers nach Anspruch 7, **dadurch gekennzeichnet, dass** der stationäre Anschlag (32) durch ein Langloch (31) verläuft, das direkt in der Verformungsplatte (9, 9') oder in einer Platte zum Anlegen im Anschlag (29), die starr an der Verformungsplatte (9, 9') befestigt ist, hergestellt ist.

9. Gebogener Abschnitt eines Förderers nach einem der Ansprüche 1 bis 8, **dadurch gekennzeichnet, dass** die Einstellmittel konzipiert sind, um eine Führungsschiene (7) zu bewegen und mechanische Verformungskräfte auf diese Führungsschiene (7) in eine Richtung (D) parallel zu der Winkelhalbierenden des Winkelsektors, der von der Führungsschiene (7) definiert wird, auszuüben.

10. Gebogener Abschnitt eines Förderers nach einem der Ansprüche 1 bis 9, **dadurch gekennzeichnet, dass** die Einstellmittel mehrere Zylinder (16, 16') umfassen.

11. Gebogener Abschnitt eines Förderers nach Anspruch 10 und einem der Ansprüche 3 bis 6, **dadurch gekennzeichnet, dass** jeder Sektor einer Verformungsplatte (9, 9'), eventuell mit Ausnahme des zentralen Sektors (S3), mit dem Schaft (17) mindestens eines Zylinders (16, 16') verbunden ist.

12. Gebogener Abschnitt eines Förderers nach Anspruch 10 oder 11 und einem der Ansprüche 2 bis 6, **dadurch gekennzeichnet, dass** der Schaft (17) jedes Zylinders (16, 16') auf der Verformungsplatte (9, 9') mittels einer Verbindung (18, 18') befestigt ist, die ein Rotationsausschlagen gemäß einer im Wesentlichen senkrechten Achse des Schafts (17) in Bezug auf die Verformungsplatte (9, 9') gestattet.

13. Gebogener Abschnitt eines Förderers nach einem der Ansprüche 1 bis 12, **dadurch gekennzeichnet, dass** die zwei Führungsschienen (7) elastisch verformbar sind, und dass die Einstellmittel konzipiert sind, um jede Führungsschiene zu versetzen und verformen.

14. Förderer für den Transport von Artikeln, der mehrere aufeinander folgende Abschnitte (1', 1, 1") umfasst, **dadurch gekennzeichnet, dass** mindestens einer dieser Abschnitte ein gebogener Abschnitt gemäß einem der Ansprüche 1 bis 13 ist.

## Claims

1. Curved conveyor section for transporting articles guided between two guide rails (7) and comprising means for adjusting the spacing (e) between the two guide rails, **characterised in that** at least one of the two guide rails is elastically deformable, and **in that** the adjustment means have been designed to displace and deform this elastically deformable guide rail so as to provide it with a given curvature which depends on its position.

2. Curved conveyor section according to claim 1, **characterised in that** the adjustment means comprise for a guide rail (7) a deformation plate (9, 9') which is elastically deformable, and **in that** the guide rail (7) is rigidly fixed to this deformation plate.

3. Curved conveyor section according to claim 2, **characterised in that** the deformation plate (9,9') is divided into several sectors (S1, ...) connected by deformable joining zones.

4. Curved conveyor section according to claim 3, **characterised in that** the deformation plate (9, 9') comprises at least one deformation slit (10a) extending in the direction of the width of the plate from one of the two longitudinal edges (9a) of the plate (9,9').

5. Curved conveyor section according to one of claims 1 to 4, **characterised in that** one guide rail (7) and the deformation plate (9,9') associated with it each have the shape of an arc of a circle and **in that** the deformation plate (9,9') is divided into at least three sectors including a central sector (S3).

6. Curved conveyor section according to claim 5, **characterised in that** one guide rail (7) and the deformation plate (9, 9') associated with it each have the shape of a quarter circle and **in that** the deformation plate (9,9') is divided into at least five sectors.

7. Curved conveyor section according to one of claims 1 to 6, **characterised in that** the adjustment means comprise for a guide rail (7) at least one fixed stop (32) and means for displacing the guide rail (7) with respect to this stop which allow the guide rail (7) be deformed by resting on this stop.

8. Curved conveyor section according to claim 7, **characterised in that** the fixed stop (32) is passed through a slit (31) made directly in the deformation plate (9,9') or in a stopping plate (29) fixed rigidly to the deformation plate (9,9').

9. Curved conveyor section according to one of claims 1 to 8, **characterised in that** the adjustment means have been designed so as to displace a guide rail (7) and exert mechanical deformation forces on this guide rail (7) in a direction (D) parallel to the bisector of the angular sector defined by the guide rail (7).

10. Curved conveyor section according to one of claims 1 to 9, **characterised in that** the adjustment means comprise several jacks (16, 16').

11. Curved conveyor section according to claim 10 and one of claims 3 to 6, **characterised in that** each sector of a deformation plate (9, 9'), except possibly the central sector (S3), is connected to the rod (17) of at least one jack (16, 16').

12. Curved conveyor section according to claim 10 or 11 and one of claims 2 to 6, **characterised in that** the rod (17) of each jack (16, 16') is secured to the deformation plate (9, 9') by means of a link (18, 18') permitting a clearance in rotation along an approximately vertical axis of the rod (17) with respect to the deformation plate (9, 9').

13. Curved conveyor section according to one of claims 1 to 12, **characterised in that** the two guide rails (7) are elastically deformable, and **in that** the adjustment means have been designed to displace and deform each guide rail.

14. Conveyor for transporting articles and comprising several successive sections (1',1,1'), **characterised in that** at least one of these sections is a curved section according to one of claims 1 to 13.
